Europäisches Patentamt

European Patent Office

Office européen des brevets

(19)

(11) **EP 1 256 920 A2**

(12) **EUROPEAN PATENT APPLICATION**

(43) Date of publication:
**13.11.2002 Bulletin 2002/46**

(51) Int Cl.7: **G09B 7/02**

(21) Application number: **01305224.6**

(22) Date of filing: **15.06.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **20.04.2001 US 284788 P**

(71) Applicant: **Cognisco Limited**
**Cranfield, Bedfordshire MK43 0BT (GB)**

(72) Inventors:
• **Popeck, Howard**
  **London, N13 4RJ (GB)**
• **Bachelor, Neil**
  **London, N21 1AU (GB)**
• **Popeck, David**
  **London, N13 4RJ (GB)**

(74) Representative: **Richardson, Julie Kate**
**Reddie & Grose,**
**16 Theobalds Road**
**London WC1X 8PL (GB)**

(54) **An evaluation system**

(57)     An evaluation system for detecting an anomalous response to a particular question from a plurality of questions is described. The evaluation system includes a first input for receiving a signal denoting that a question has been delivered to the trainee and a second input for receiving a signal denoting that the trainee has submitted a response to the question. A timer coupled between the first and second inputs determines the time elapsed between the trainee receiving the question and submitting a response to the question. The trainee is required to submit a confidence level in his response and the evaluation system includes a confidence level receiver for receiving a signal relating to the trainee's confidence level in his response. For each of the plurality of questions data relating to a score, confidence level and the elapsed time are stored. An anomaly processor processes the score, confidence level and elapsed time data for a set of questions taken from the plurality of questions. An output indicating whether or not an anomalous response to a particular question is detected is produced. The evaluation system is particularly suited for use in a computerised training system where a trainee's responses to a set of questions must be assessed to determine whether or not the trainee passes the assessment.

Fig. 3

## Description

The present invention relates to an evaluation system. In particular it relates to an evaluation system for detecting an anomalous response.

In general organisations currently provide high levels of training, and in some cases, retraining, for employees to try to improve their performance or to standardise the service provided by different members of staff within an organisation. A current trend has been for organisations to outsource the training of its staff and the use of generic training material provided by specialist training companies has become widespread.

We have appreciated that, although the training material itself is frequently of high standard, the way in which it is used leads to it being an ineffective education tool. The training environment fails to identify the immediate and medium-term requirements of individuals undergoing training and to tailor the training to meet those requirements.

Assessment or testing to determine whether or not a trainee has understood and assimilated the information has been superficial and ineffective. In particular, it has not been possible to gain any insight into whether the trainee has misunderstood a question or has guessed an answer. Such events may have a marked effect on the overall results of any test causing a trainee to fail when he may have a satisfactory grasp of the subject-matter or fortuitously pass by guessing the right answers. A trainee who fortuitously passes may not possess sufficient knowledge to function effectively in his job. He is also less likely to be able to apply the knowledge in practice if he has been guessing the answers in the test. Known testing techniques cannot detect such events or minimise the risk of anomalous results.

The present invention aims to overcome the problems with known training evaluation techniques.

The invention is defined by the independent claims to which reference should be made. Preferred features of the invention are defined in the dependent claims.

Preferably the evaluation system detects responses which do not match the trainee's overall pattern of responses and causes further questions to be submitted to the trainee to reduce or eliminate the amount of anomalous data in the response set used for the assessment of the trainee's knowledge. We have appreciated that providing an effective assessment mechanism does not require the reason for the anomaly to be identified. Detection of the anomaly and provision of additional questioning as necessary to refine the response data set until it is consistent enhances the effectiveness and integrity of the testing process.

Preferably, pairs of data are selected from the data relating to the score, data relating to the confidence and data relating to the time, for example one data pair may be score and time and a second data pair may be score and confidence, and the data pairs are processed.

By pairing the data and then processing the pairs of data the evaluation system is made more robust. Preferably, the data is processed by correlating data pairs.

Embodiments of the evaluation system will now be described by way of example with reference to the accompanying drawings in which:

Figure 1 is a schematic diagram showing a general training environment in which use of the evaluation system in accordance with the invention is envisaged;

Figure 2 is a schematic diagram showing the control of the evaluation system in accordance with the invention;

Figure 3 is a flowchart showing an overview of how the evaluation system functions;

Figure 4 is a screen shot of a test screen presented to a trainee being assessed by the evaluation system; and

Figures 5a to 5d give an example of the data captured by the evaluation system and the data processed by the evaluation system for a nominal ten question assessment.

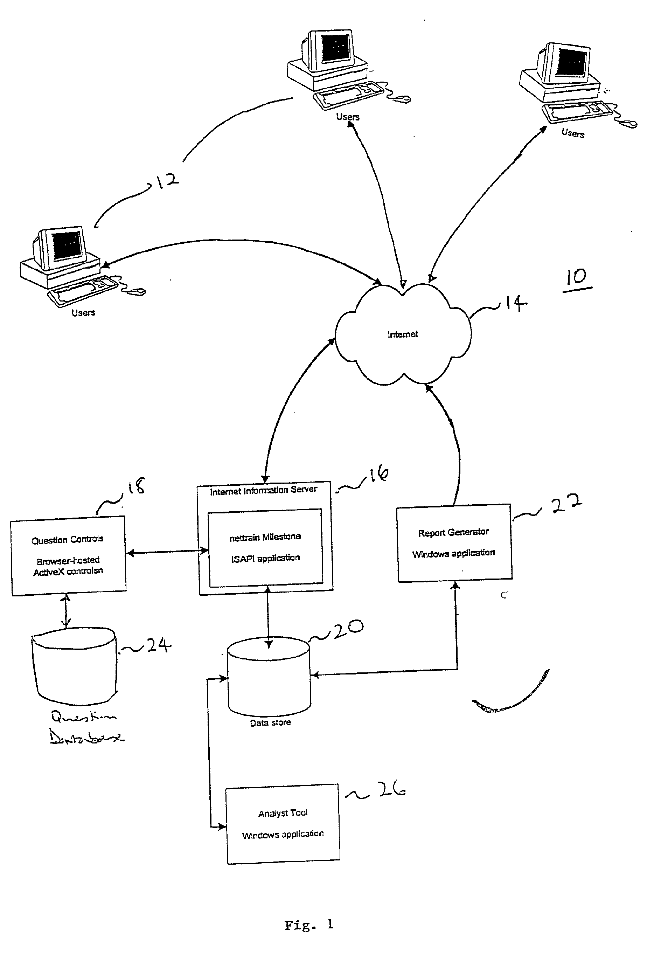

Figure 1 is a schematic diagram showing a general environment 10 in which the training evaluation system may be used. A plurality of user terminals 12 are connected via the Internet 14 to a training system server 16. The training system server 16 hosts the training system and is coupled to a question controller 18 and a data store 20. Employees of organisations which subscribe to the training system are given a log-in identifier and password. To undergo training, the employee logs on to the training system server 16. The server 16 accesses the data store 20 to determine what type of training is relevant to the particular employee. Relevant training material is provided to the trainee for assimilation and testing of the trainee to confirm that the knowledge has been assimilated satisfactorily is provided.

Training modules may be defined in a hierarchical structure. The skills, knowledge and capabilities required to perform a job or achieve a goal are defined by the service provider in conjunction with the subscribing organisation and broken down by subject-matter into distinct courses. Each course may have a number of chapters and within each chapter a number of different topics may be covered. To pass a course, a trainee may be required to pass a test covering knowledge of a particular topic, chapter or course.

Testing is performed by submitting a number of questions to the trainee, assessing their responses and determining whether or not the responses submitted indicate a sufficient knowledge of the subject-matter under test for the trainee to pass that test. Testing may be performed independently of training or interleaved with the provision of training material to the trainee.

Once the trainee has undertaken a particular test, data relating to their performance may be stored in the data store for subsequent use by the trainee's employer. A report generator 22 is coupled to the data store 20 and a training supervisor may log-on to the training system server and use the report generator 22 to generate a report indicating the progress, or lack of it, of any of his employees. The report generator 22 also allows the training supervisor to group employees and look at their combined performances.

In order to provide relevant assessment of the training provided, the training system server 16 is coupled to a question controller 18 which selects relevant questions from a question database 24. The selected questions are transmitted over the Internet 14 to the trainee's terminal 12 where they are displayed. The trainee's responses to the questions are captured by the terminal 12 and transmitted to the training system server 16 for processing.

An analyst server 26 is coupled to the data store 20 to allow the training system provider or the training supervisor of a particular organisation to set up the system with details of the particular subscribing organisations, organisation configuration, employees, training requirements for groups of employees or individual employees and generally configure a suitable test scenario.

Thus, the training environment depicted in figure 1 provides trainees with access to test questions on one or more training courses and provides a training system for capturing the trainee's responses and processing the results to determine whether the trainee has passed or failed a particular test.

The evaluation system in accordance with the present invention may be used in conjunction with the above training environment. The aim of the evaluation system is to improve the quality of the training by checking that the results of testing are not adversely effected by the trainee misunderstanding a question or simply guessing the answers. The evaluation system is particularly suitable for use in the web-based training environment described briefly above, or in any computer based training environment.

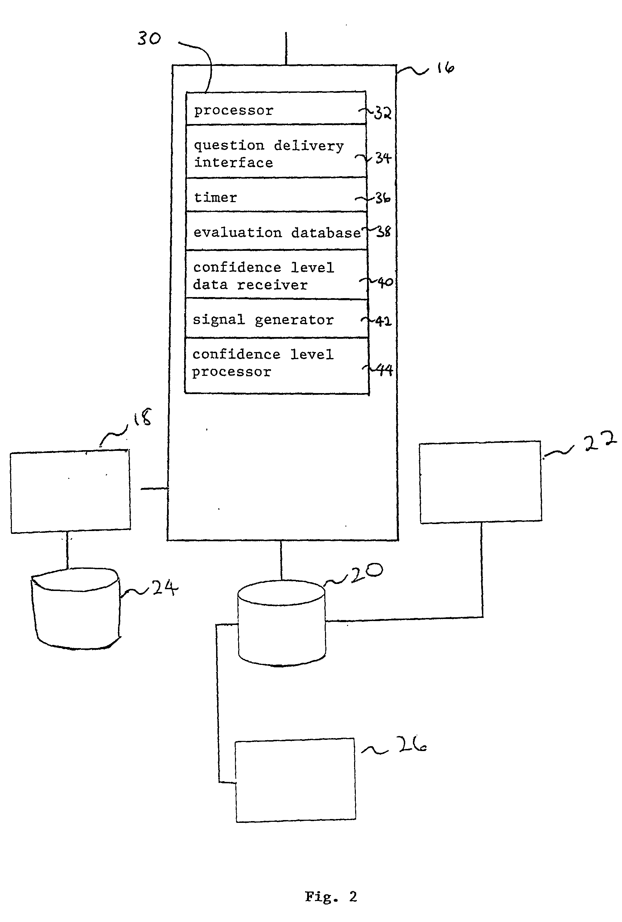

The evaluation system 30 is preferably implemented as a computer programme hosted by the training system server 16 as shown in figure 2. The evaluation system 30 comprises an anomaly processor 32, a question delivery interface 34, a timer module 36, an evaluation database, or store, 38 and a confidence level receiver 40. The question delivery interface 34 interfaces between the question controller 18 and the anomaly processor 32 of the training evaluation system 30. The confidence level receiver 40 provides a means for the trainee to input to the evaluation system an indication of how confident he is that his response is correct. A signal generator 42 and a confidence level processor 44 are also provided by the evaluation system.

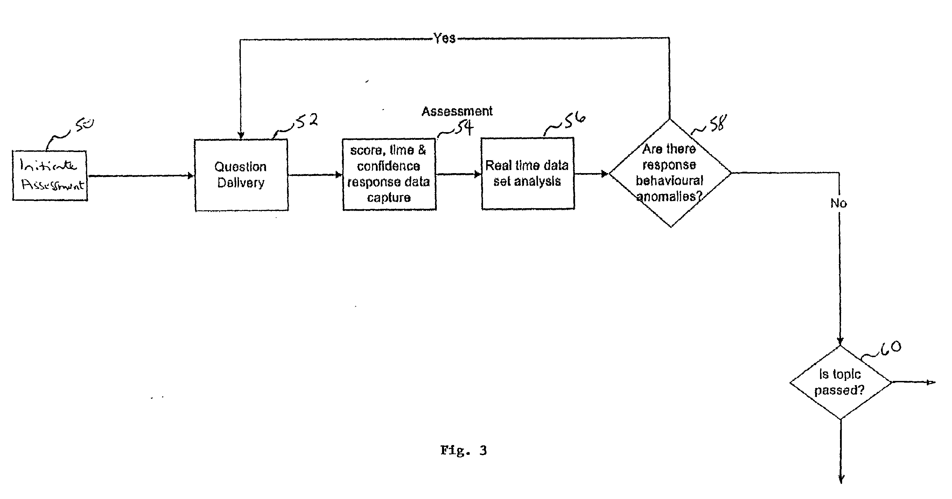

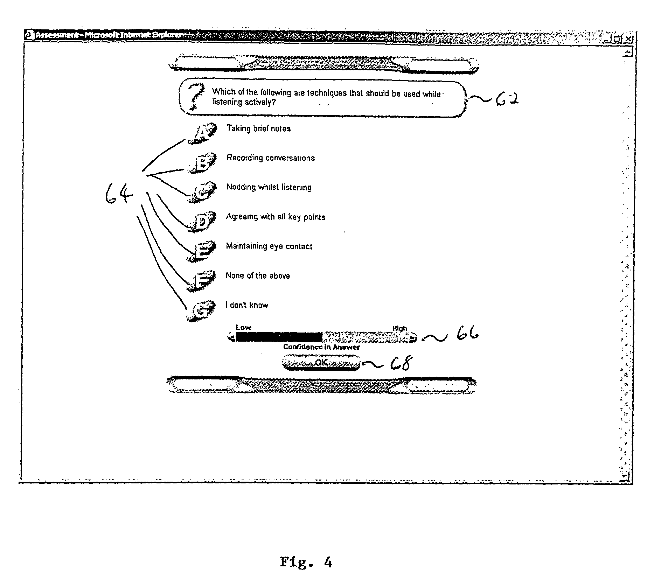

Figure 3 is a flowchart showing an overview of the operation of the evaluation system. The evaluation system is implemented in a computer program and the questions delivered to the trainee over a network. It uses the computer monitor to display the questions to the trainee and the keyboard and/or mouse for the input by the trainee of the question response and confidence level. Training material is delivered to the trainee over the Internet by transmission from the training system server 16. The trainee views the training material on a user terminal 12. At a predetermined point an assessment of the trainee's understanding of the training material is required. The assessment is automatically initiated 50 at an appropriate point in the trainee's training programme. A number of questions relevant to the subject being studied are selected by the question controller 18 and transmitted sequentially to the user terminal where they are displayed 52. The evaluation system requires that a trainee's score, time to respond to each question and confidence level in his response are captured 54. Figure 4 shows an example of a test question displayed on a user terminal. A question 62 is prominently displayed at the top of the display screen. A number of alternative responses to the question 64 are displayed beneath the question 62 on the screen. The trainee selects one response by highlighting it with a mouse. In addition to the question and alternative responses, the trainee is required to indicate his confidence that chosen response is correct. The signal generator 42 generates a signal which causes a sliding indicator 66 to be displayed at the trainee's computer. The trainee moves the sliding indicator 66 to indicate his confidence level by pointing to the appropriate part of the screen with a mouse and dragging the marker to the left or right. Once the trainee is happy with his selected response and confidence indication he alerts the training system using the okay button 68. The confidence level captured by the user terminal is converted to a confidence level signal which is transmitted along with the response. The confidence level signal is captured by the confidence level receiver and processed by the confidence level processor to quantify the confidence level. The trainee's response is also captured by the user terminal and is transmitted to the training system server 16. The response for each question is processed by the training system server and assigned a score based its suitability as a response in the particular scenario set out by the question. The score and confidence level for each question are stored in the evaluation database 38. The training system server 16 then transmits to the user terminal 12 the next question selected by the question controller 18.

In addition to the trainee's scores for each question and his confidence levels in his selected responses, the evaluation system requires an indication of the time taken by the trainee to select a response to each question and to indicate his confidence level. This time is measured by timer module 36 and its measurement is transparent to the trainee. If the trainee were aware he was being timed this may adversely affect his response by prompting him to guess answers rather than consider the options and actively choose a response that he feels is most likely to reflect the correct response. However, by measuring the time taken to submit a response, the evaluation system may be made much more robust and effective. If the trainee takes more than a system maximum time (SMT) to submit a response to a question there is a strong possibility that he has been interrupted and the results of the test would be corrupted by one response being completely unrepresentative. Hence, if the elapsed time is greater than a SMT defined for the particular test, the elapsed time is set to equal the system maximum time. The presently preferred maximum time is 100 seconds. The timer 36 has two inputs. The first input monitors the generation or transmission of a question by the question controller 18. When a question is transmitted by the training system server 16 to the user terminal 12 the timer 36 is initiated by setting its value to zero and timing is commenced. When the user indicates that he is satisfied with his chosen response and indicated confidence level by hitting the button 68, the signal sent to the training system server 16 is detected by the second input of the timer 36 and causes timing to stop. The elapsed time measured by the timer 36 is stored in the database 38 for use by the processor 32. The timer value is reset to zero, the timer started and the next question transmitted to the user terminal.

After the predetermined number of questions has been transmitted to the user terminal and responses indicated by the trainee and received by the training system server, the data in the evaluation database 38 is processed 56 (see below) by a score time correlation, a confidence time correlator and a confidence time correlator. The results of the correlators are combined in a combiner to provide a score time confidence quantity to which a simple thresholding test 58 is applied to see whether or not an anomaly in any of the trainee's responses is indicated. If the processed data indicates an anomaly in the response for a particular question, a trigger device triggers the delivery of a further question. A further question on the same subject-matter as the particular question whose response was anomalous is selected by the question controller 18 from the question database 24 and transmitted to the user terminal for the trainee to submit a response. The score, time and confidence level for the replacement question are captured in the same way described above and are used to overwrite the evaluation database entry for the anomalous response. The database is reprocessed to see whether any further anomalies are indicated. Alternatively the database may store the replacement responses in addition to retaining the original anomalous response. The replacement response would, however, be used to reprocess the data to see whether or not any further anomalies are detected. This has the added advantage of allowing a training supervisor to check the entire performance and responses of a trainee. If further anomalies are detected in the same question or other questions, further replacement questions are transmitted to the trainee. If no anomalies are detected, or the detected anomalies removed by replacement responses which follow the pattern of the trainee's other responses, then no further questions are delivered and the trainee's scores are compared with the pass mark to determine whether the trainee has passed or failed.

The evaluation system is designed to react to trends identified in a data set generated by an individual trainee during a given test or assessment. Evaluation only leads to further questioning if anomalies are detected in the trainee's responses. It does not judge the individual trainee against a benchmark response. Even if the system triggers further questioning needlessly, the extra overhead for the training system and trainee is minimal compared to the benefit that can be obtained by minimising anomalies in testing.

Processing of the score, time and confidence level data

Once a trainee has submitted answers to the prerequisite number of questions the response data is processed. Processing requires consideration of the set of responses to all the questions and consideration of whether the trainee's responses to one particular question has skewed the results indicating an anomaly in his response to that particular question. The three types of data, data relating to the score, data relating to the confidence and data relating to the time, are combined in pairs, eg score and time, and the data pairs processed. In the presently preferred embodiment, processing takes the form of correlation of the data pairs.

Set based coefficients are estimated first followed by estimation of the coefficients for reduced data sets, each reduced data set having one response excluded. By comparing the coefficients for the set with the question excluded coefficients it is possible to quantify how well the response to one particular question matches the overall response to the other questions. Once quantified, this measure is used to determine whether or not to submit further questions to the trainee. Further questions are submitted to the trainee if the measure indicates that the response is atypical in a way which would suggest that the trainee has simply guessed the answer or has taken a long time to select an answer which may indicate that he has encountered problems understanding the question or has misunderstood the question and hence encountered difficulties in selecting a response, perhaps because none of the options seem appropriate.

General explanation of SC, CT, and ST calculations

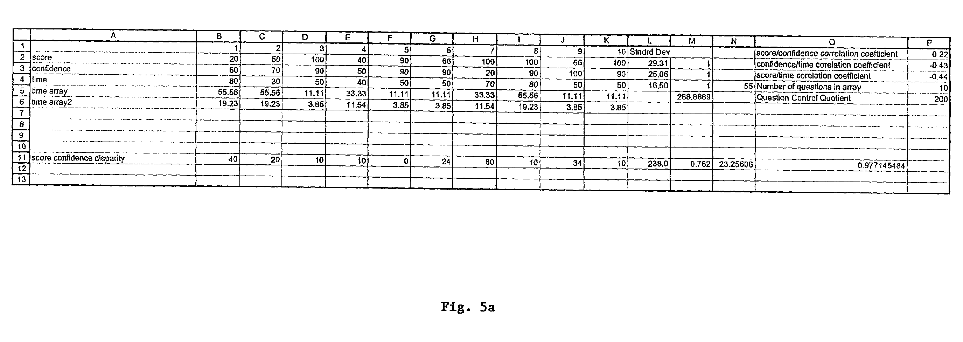

Figures 5a to 5d show the printout of a spreadsheet created to estimate the required coefficients for the given example responses. The manner in which the data is set out is intended to aid understanding of the processing involved.

The example in figures 5a to 5d relates to a test which comprises 10 questions to which the responses, confidence level and response times have been captured and stored. The data corresponding to each question is arranged in columns with question 1 related data located in column B, question 2 related data located in column C, ..., question 10 related data located in column K. The score for the trainee's response to each question is stored in row 2 at the appropriate column, the trainee's confidence level in row 3 at the appropriate column and the time in row 4 at the appropriate column. In the example given, the score has been expressed as a percentage of the possible score and accordingly the score could take any value between 0 and 100. In practice, scores are likely to fall in the 16.6/20/25 percentile intervals for questions with 6, 5 and 4 options respectively and generally the percentile intervals will be dictated by the number of responses to the question. The confidence level is captured by the sliding bar mechanism and also takes a value from 0 to 100. In practice, a grading system could be applied to the confidence level so that only certain discrete confidence levels are acceptable to the system and values between those levels are rounded to the nearest level.

The value for time shown in the example and used in the system is relative and not absolute. Trainees read and respond to questions at different rates. To try to minimise the effects of this in the anomaly detection, an estimate of the mean time to respond to the set of questions is calculated for any one trainee and the time taken to respond to each particular question expressed in terms relative to the mean time. In the example given a time value of 50 represents the mean response time of the trainee over the 10 questions in the set.

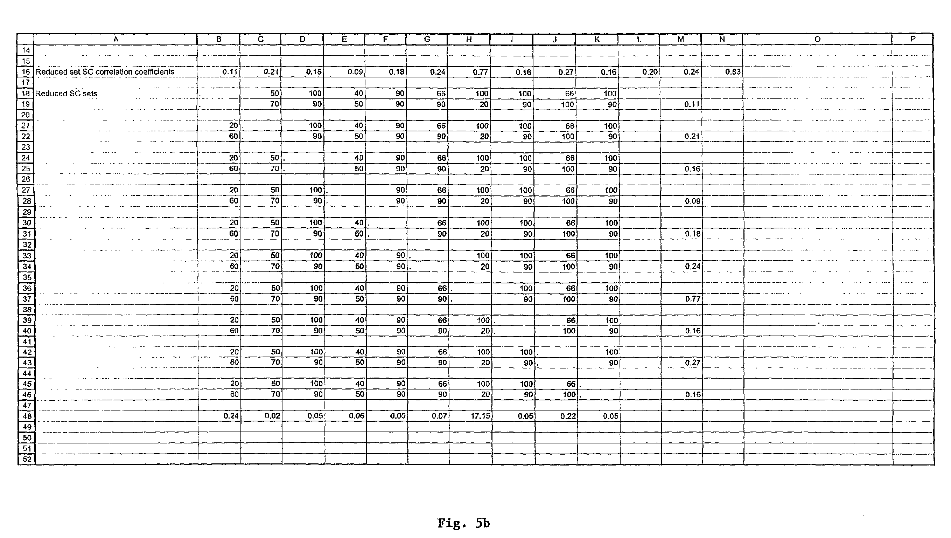

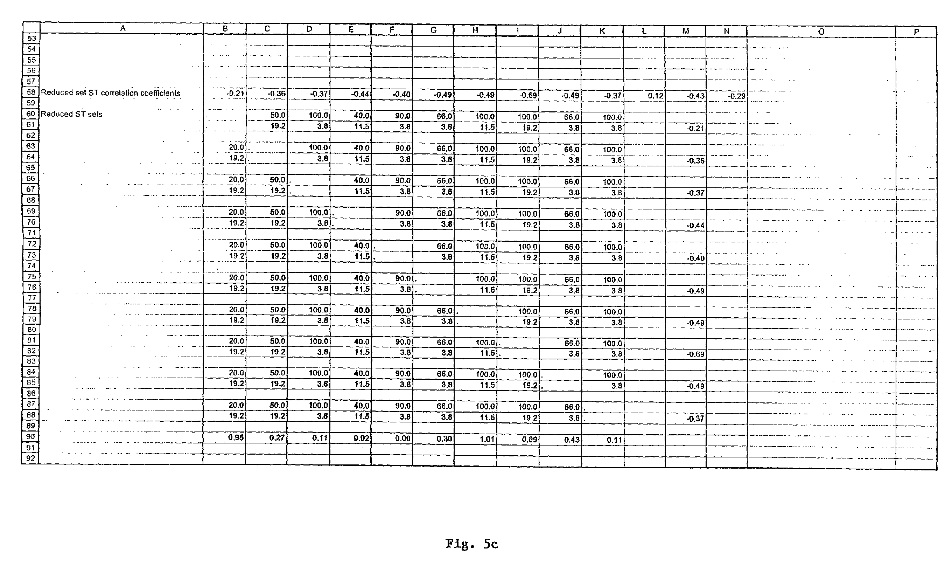

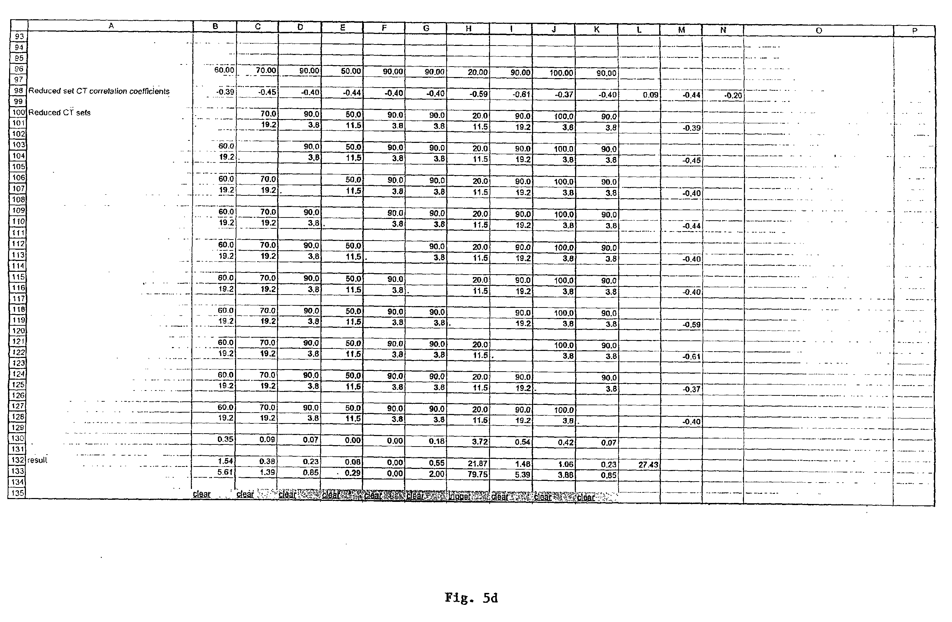

The remaining data in the tables are calculated from the score, confidence level and time data and the table populated with the results. The table has been split over figures 5a to 5d to show more clearly the calculation of each of the correlation coefficients. The results of the score confidence correlation coefficient is shown in figure 5b, that of the score time correlation coefficient in figure 5c and that of the confidence time correlation coefficient in figure 5d. Figure 5d also shows the combination of the three correlation coefficients to determine whether the evaluation system should trigger a further question to be answered by the trainee or not.

The data processing quantifies the trainee's responses in terms of score, confidence level and time to determine whether or not a particular response fits the pattern of that trainee's responses or not. Where a deviation from the pattern is detected this is used to indicate an anomaly in the response and to require the trainee to complete one or more further questions until an anomaly free question set is detected. This involves correlating pairs of data from the score, time and confidence level for the complete set of questions and for the set of questions excluding one particular question. In the given example there are 10 questions to which the trainee has submitted his responses.

It is reasonable to expect a strong correlation between a correct answer and a high confidence level and equally between an incorrect answer and a low confidence level. However, a trainee may perfectly legitimately select an incorrect answer yet be reasonably certain that the answer they have selected is correct and indicate a high confidence level. Thus, to detect inconsistencies in the trainee's responses the evaluation system relies not only on the score/confidence correlation calculations but also on score/time correlation calculations and confidence/time correlation calculations. If the trainee has taken longer than average to answer a particular question this may indicate he has struggled to understand the question, has not known the answer or has simply been distracted. If the trainee has taken less time than average to respond to a question that may indicate he knew the answer straight away or he has guessed the answer and entered a random confidence level. Using more than one correlation measure to come to a conclusion on whether or not the response is anomalous provides a more robust evaluation system.

Score/Confidence Correlation

Let the score for each question be denoted $s_j$ and the confidence for each question be denoted $c_j$ where j is the question number and varies from 1 to the maximum number of questions. The score and confidence data is tested to check that the score and/or confidence values for all questions are not equal. If they are equal, the score/confidence correlation coefficient is assigned the value 0.1 to indicate that trainee has not complied with the test requirements. If they are not equal, the score/confidence correlation coefficient for the entire set of questions, $SC_{set}$ is calculated according to the following equation:

$$SC_{set} = \frac{Cov(S,C)}{\sigma_s . \sigma_c} = \frac{1}{\sigma_s . \sigma_c . n} \cdot \Sigma_{j-1}^{n} (s_j - \mu_s)(c_j - \mu_c)$$

where $\mu_s$ and $\mu_c$ are equal to the mean value of the score and the confidence level respectively and $\sigma_s$ and $\sigma_c$ are the standard deviations of the score and confidence levels respectively. For the example given in figure 5, the score/confidence correlation for the entire set is given in row 1 column P.

Additional information can be obtained on the trainee's responses by looking at how the score/confidence correlation changes when a particular question is excluded. Hence, assuming there are M questions in a particular test, M further score/confidence correlation values may be determined by excluding each time one particular score and confidence response. A reduced set of score and confidence data is formed by excluding the score and confidence for the particular question. The mean, standard deviation and the correlation coefficient for the reduced set are then calculated.

By comparing the values of the score/time correlation coefficient for the set with those for the set excluding a particular question it is possible to quantify how much the response to the particular question affects the overall results for the set. A large difference between the value of $SC_{set}$ and $SC_{(set - question\ P)}$ where P=1,2, ..., M is indicative of an atypical response to that particular question.

In the example of figure 5a, rows 18 to 46 show the calculation of the reduced set SC correlation coefficient eliminating the first, second, ..., tenth questions respectively from the data set. The reduced set SC coefficients are given in column M and repeated at row 16 in columns B to K with the reduced set (set - question 1) occupying column B, (set - question 2) occupying column C etc.. Comparing elements H16 $(SC_{(set - question\ 7)})$ and B7 $(SC_{set})$ we can see that removing the responses to question 7 (corresponding to column H) from the set, the score/confidence correlation coefficient alters from 0.21 to 0.77, a change of 0.56. When we look at the effect on the score/confidence correlation coefficient of removing the other questions we note that the maximum change is 0.12 and we can immediately see that there appears to something atypical about the trainee's response to question 7.

One reason for the atypical result (score=100, confidence =20) could be that the trainee didn't know the answer to the question and guessed, chancing on the correct answer. The trainee appreciating that he didn't know the answer logged his confidence level as low. It is also clear that it would be beneficial to test the trainee again on this subject-matter rather than allow his fortuitous guess to lift him over the test pass mark when he may not have the requisite knowledge to pass. This score/confidence correlation comparison is effective at determining anomalies caused by the trainee guessing correctly without any confidence in his answer.

In this case the score confidence correlation coefficient detected the anomaly easily but it may be that the anomaly is obscured by comparing only the score and confidence data.

Score/Time Correlation

In addition to the score/confidence correlation, a score/time correlation is performed.

For anomaly evaluation purposes, the score/time and confidence/time correlation coefficients are improved by using a "factored time" relating to the deviation from the mean time. The factored time is estimated by a deviation processor provided by the evaluation system. The average time taken by the trainee to submit a response and confidence level is calculated and stored in the table at element 4N (the terminology 4N will be used as a shorthand for "Row 4, Column N"). This average time and the system maximum time, SMT = 100 seconds, is used to determine a "normalised time" which is calculated according to the following equation:

$$normalised\ time = \frac{(time + average\ time)}{(SMT - average\ time)} \cdot SMT$$

This normalised time quantifies the amount by which the response time for the particular question differs from the response time averaged over all the questions. The normalised time is then factored for use in the calculation of the confidence/time correlation coefficient, CT. The factored time is calculated in accordance with the following equation:

$$factored\ time = \frac{normalised\ time}{\Sigma_1^N\ normalised\ time} \cdot 100$$

where N=total number of questions.

If either the factored time for each question is the same or the score for each question is the same then the trainee has not complied with the test requirements and the score/time correlation coefficient is set to a value of 0.1. Otherwise, the correlation between the factored time and the score is calculated and stored as the score/time correlation coefficient. This calculation follows the equation given above for the score/confidence correlation coefficient but uses the factored time data in place of the confidence data.

As with the score/confidence measure, for a set of ten questions eleven values for the score/time correlation coefficient are calculated. Firstly, the score and factored time values for all questions are correlated to determine the score/time correlation for the entire set of questions, $ST_{SET}$. For the example given in figures 5c the value of $ST_{SET}$ is -0.44, indicated at row 3 column P.

Next, the responses for each question are excluded in turn from the data set and the score/time correlation for the reduced data set calculated, $ST_{(set - question\ P)}$ where P varies from 1 to N and is the number of the question whose responses are excluded in a particular calculation. Figure 5c shows the reduced data sets at columns B to K of rows 60 to 88 and the reduced set ST coefficient for the reduced data set in column L of the appropriate row. For convenience the reduced set ST coefficients are repeated in row 58 with the ST coefficient excluding question 1 in column B, excluding question 2 in column C etc.. From figure 5c we can see that the largest differences in the ST values are for questions 1 and 7 (where the differences are 0.24 and 0.23 respectively) . The ST spreads, that is the amount by which the ST value excluding a particular question differs from the ST value for the entire set, are [0.24 0.08 0.07 0.00 0.04 0.05 0.05 0.23 0.05 0.07]. From the ST spread we may conclude that there are anomalies in the responses of both question 1 and question 7. Looking in isolation at the score and time data it is not possible to detect any pattern which could be used to detect an anomaly in the response. Using the score time correlation coefficients for the set and the reduced sets shows a trend which can be used to detect a potential anomaly.

In the case of question 1 further assessment of the additional correlation coefficients indicates that this question is less likely to be anomalous than the score time correlation coefficient suggests. This emphasises the importance of performing anomaly evaluation using a combination of different correlations.

Confidence/Time correlation

As with the score time correlation calculation, the confidence time correlation uses the factored time. If the factored normalised time for each question is the same or the confidence for each question is the same then this may indicate that the trainee has not complied with the test requirements. The confidence/time correlation coefficient is set to a value of 0.1 if this is found to be the case. Otherwise, the correlation between the confidence and the factored normalised time for the entire set of question responses is calculated and stored as the confidence/time correlation coefficient, $_{Ctset}$. In the table of figure 5, the value for $CT_{set}$ is stored in row 2 column P.

Next, the confidence/time correlation coefficients for each reduced set of data are calculated, $CT_{(set - question P)}$ where P is the question whose responses are excluded from the overall set of data to form the reduced data set. The reduced data sets for the CT correlation coefficient calculations are shown in figure 5d at rows 100 to 128 and the reduced set CT correlation coefficients in the appropriate rows at column M and repeated for convenience in row 98 in the same manner as the SC and ST reduced set correlation coefficients. The spread of CT coefficients, that is the difference between the CT coefficient for the entire set of questions compared with the CT coefficient for the reduced sets, are:

| | |
|---|---|
| question 1 | 0.04 |
| question 2 | 0.02 |
| question 3 | 0.03 |
| question 4 | 0.01 |
| question 5 | 0.03 |
| question 6 | 0.03 |
| question 7 | 0.17 |
| question 8 | 0.18 |
| question 9 | 0.06 |
| question 10 | 0.03 |

from which we can see that the CT spread for questions 7 and 8 is much larger than that for the remaining questions suggesting a potential anomaly with the responses to these questions.

It will be noted that the results for question 7 have consistently been highlighted as anomalous whereas although one of the 3 correlation calculations have called into question the responses for other questions, this has not been reflected in the other 2 correlation calculations. Combining all 3 correlation coefficients establishes a way of evaluating the trainee's responses to determine whether or not any of the responses are anomalous. The 3 correlation coefficients are combined to give a single value, termed the STC rating, which quantifies the consistency between the trainee's responses to the particular question with the trainee's overall response behaviour. The lower the number the more consistent the question response with the trainee's overall behaviour. Conversely, a high number indicates a low consistency.

Combination of the SC, ST and CT correlation coefficients

The SC, ST and CT correlation coefficients for the reduced sets are combined in accordance with the following equation:

$$STC_{set-N} = abs(\frac{1}{2} \cdot \Delta sc.(SC_{set-N} \cdot (SC_{set-N} - SC_{set})$$
$$+ ST_{set-N}(ST_{set-N} - ST_{set}) + CT_{set-N}(CT_{set-N} - CT_{set})))$$

where $\Delta sc$ is the absolute difference between the score and confidence values. $\Delta sc$ may be thought of as a simple significance measure. A large absolute difference between the score and confidence levels is indicative of a disparity between what the trainee actually knows and what he believes he knows. This may be due to the trainee believing he knows the answer when in fact he does not. Alternatively it could be due to the trainee misunderstanding the question and thus indicating for a given response a confidence level which is at odds with the score for the response. It is, therefore, taken into account when calculating the Score Time Confidence (STC) rating.

The percentage STC is then estimated as

$$\%STC_{set-N} = \frac{STC_{set-N}}{\Sigma_N STC_{set-N}} .100$$

where N is the question number and varies in the example of figure 5 from 1 to 10.

A test of each $\%STC_{set-N}$ is then performed to determine whether the value is less than a threshold in which case no anomaly for the particular question is detected, or over the threshold in which case an anomaly in the response for that particular question compared to the remaining questions of the set is detected and the evaluation system triggers the training system to deliver a further question on the same subject-matter for the trainee to answer. A suitable threshold should be chosen depending on, for example, the type of questions forming the assessment, the instructions to the trainee on assessing the question and the number of questions in the assessment. In the example of figure 5, a question control variable is defined at element P5 and the number of questions in the assessment is defined at element P4. The threshold is calculated according to the following equation:

$$\text{threshold} = \frac{\text{question control variable}}{\text{number of questions}}$$

and is therefore 200/10 = 20, which is deemed sufficiently incongruous with the rest of the data to warrant delivery of a further question.

When the response to the replacement question is received the time, confidence and score data for that question is updated in the evaluation database and the SC, CT and ST coefficients recalculated. Any further anomalies detected by the evaluation system trigger further questions until either the number of questions reaches a test defined maximum or no further anomalies are detected.

In the example given in figure 5, the STC rating is calculated in steps. At row 132 the intermediate value of

$$\frac{1}{2} . \Delta sc \ . \ SC_{set-N}(SC_{set-N}\text{-}SC_{set})$$

and corresponding intermediate values for CT and ST are calculated at rows 130 and 90 respectively. These values are summed and the absolute value taken in row 132 to form the STC rating for the question. The percentage STC rating is calculated in row 133 and row 135 performs the testing to determine whether or not further questions are triggered. From figure 5d it is clear that the combined STC rating for the set excluding question 7 indicates that the responses to question 7 do not follow the pattern of the trainee's other responses and the evaluation system triggers the training system to deliver a further question on the same subject-matter as question 7 to the trainee.

Several other intermediate values may be calculated by the spread sheet to facilitate estimation of the STC ratings. In table 5a, row 11 stores the $\Delta sc$ value used in the calculation of the STC rating. Other intermediate values may also be estimated and stored.

It should be noted that the features described by reference to particular figures and at different points of the description may be used in combinations other than those particularly described or shown. All such modifications are encompassed within the scope of the invention as set forth in the following claims.

With respect to the above description, it is to be realized that equivalent apparatus and methods are deemed readily apparent to one skilled in the art, and all equivalent apparatus and methods to those illustrated in the drawings and described in the specification are intended to be encompassed by the present invention. Therefore, the foregoing is considered as illustrative only of the principles of the invention. Further, since numerous modifications and changes will readily occur to those skilled in the art, it is not desired to limit the invention to the exact construction and operation shown and described, and accordingly, all suitable modifications and equivalents may be resorted to, falling within the scope of the invention.

For example, the evaluation system described above compares the responses on a question by question level. The system could be extended to take into account any significant grouping of the questions. If say five of the questions concerned one topic, three questions a second topic and the remaining questions a third topic, the STC rating for the subsets of topic related questions could also be compared. This would help to identify trends in trainee's responses on particular topics which may be used to trigger a further question on a particular topic which would not have been triggered by an assessment wide evaluation or to prevent a further question being triggered when an assessment wide evaluation may indicate further questioning if the STC rating compared with other questions in that subset suggest there is no anomaly. This could be used to adapt the response of the training system for example by triggering delivery of more than one replacement question on a topic where a candidate has a high frequency of anomalous results perhaps indicating a lack of knowledge in that particular area or it may be used to adapt the test applied to the data to determine whether or not the trainee has passed the test. For example, where more than a threshold number of anomalies are detected the pass rate could be increased to try to ensure that the trainee is competent or the way in which the test result is calculated could be adapted to depend more or less strongly on the particular topic where the anomalies were detected.

The evaluation system could be used to flag any questions to which a number of trainee's provide anomalous responses. This may be used by the training provider to reassess the question to determine whether or not it is ambiguous. If the question is found to be ambiguous, it may be removed from the bank of questions amended or replaced. If the question is considered unambiguous then this may be used to help check the training material for omissions or inaccuracies.

The evaluation system could feed the number of anomalies into another module of the training system for further use, for example in determining re-test intervals.

Although the evaluation system has been described as receiving a score assigned to the response to a question, it could receive the response and process the response to assign a score itself. The evaluation system may be implemented on a server provided by the service provider, or may be provided at a client server, workstation or pc, or at a mixture of both.

Although the evaluation system has been described for an assessment where multiple choice responses are offered to a question at the same time, the responses or various options could be transmitted to the trainee one after another and the trainee be required to indicate whether or not he agrees with each option and his confidence level in his choices. In this case, the time between each option being transmitted to the trainee and the trainee submitting a response to the option and his confidence level would be measured. The evaluation system could then determine whether or not an anomaly was detected to any particular option to a question. For example, the five options shown in figure 4 could be displayed to the trainee one after another and the trainee required to indicate with each option whether he agreed or not that the option was suitable in the scenario of the question and his confidence in his selection. On a question level basis, there would then be five possible anomalous responses and each response to the single question would be evaluated to detect any anomalies.

It is possible that there could be an assessment consisting of only one question with a number of options which are transmitted to the trainee. In this case, for the purposes of the invention each option would effectively be a question requiring a response.

Although the evaluation system has been described as using only the score, confidence and time data measured for the trainee, it could also perform a comparison of the trainee's data with question response norms estimated from a large set, for example 500, responses to that question. A database of different trainee's responses to the same question could be maintained and used to estimate a "normalised" response for benchmarking purposes. The comparison of the various score/time, confidence/time and score/confidence correlation coefficients for the particular trainee's responses may be weighted in the comparison such that the anomaly detection is more sensitive to anomalies within the trainee's responses than to anomalies with benchmarked normalised responses.

Although the score and confidence data have been treated as independent in the embodiment of the evaluation system described with the score being assigned a value independent of the confidence, the confidence could be used to determine a dependent score value. The dependent score value could be based on a value assigned to the response on the basis of its appropriateness as a response in the scenario posed by the question, its score, and the confidence level indicated by the trainee in the response according to the following equation:

$$\text{dependent score} = \text{score} \times \text{confidence}$$

In this case, only the dependent score and time would be used as a data pair to determine an STC value because the dependent score already incorporates the confidence.

It would also be possible to cause the evaluation system to detect each time a trainee selected a different response before he submitted his response. A trainee who changes his mind on the appropriate response is likely to be uncertain of the answer or have misread the question and either of these circumstances might indicate an anomaly in comparison to his other responses. The evaluation system could therefore be designed to keep a tally of the number of responses to a question selected for that question before the trainee settles for one particular response and submits it. This monitoring would preferably be performed without the trainee's knowledge to prevent it unnecessarily affecting his performance. If a trainee changes his mind a number of times for a particular question, but generally submits his first selection, this may be used to detect a possible anomalous response and to trigger further questioning.

Instead of using the score, the deviation from the mean score could be determined and used in the score/time and score/confidence correlation calculations.

Rather than wait for the responses to the set number of questions for the assessment before processing for anomalies, the evaluation system could commence processing after a small number, say 3, responses had been submitted and gradually increase the data sets used in the processing as more responses were submitted. This would allow the evaluation system to detect anomalies more quickly and trigger the additional questions before the questions have moved to a new topic for example. Alternatively, it could retain the particular trainee's previous test responses and assess the responses to the new test against those of the previous test to perform real-time anomaly detection.

The confidence levels could be preprocessed to assess the trainee's general confidence. Different people display very different confidence levels and preprocessing could detect over confidence in a candidate and weight his score accordingly or a general lack of confidence and weight the score differently.

The deviation from the trainee's mean confidence level for the test rather than the trainee's indicated confidence level could be used in the correlation calculations to amplify small differences in an otherwise relatively flat distribution of confidence levels.

**Claims**

**1.** An evaluation system comprising:

a first input for receiving a signal denoting that a question has been delivered to a trainee;
a second input for receiving a signal denoting that the trainee has submitted a response to the question;

a timer, coupled to the first and second inputs, for determining the time elapsed between the trainee receiving the question and submitting a response to the question;

a confidence level receiver for receiving a signal relating to a trainee's confidence level in his response;

a store for storing, for each of a plurality of questions, data relating to a score, a confidence level and the elapsed time for at least one trainee;

an anomaly processor, coupled to the store, for processing the data relating to the scores, confidence levels and elapsed times for a set of questions taken from the plurality of questions and for producing an output indicating whether or not an anomalous response to a particular question is detected.

2.  An evaluation system according to claim 1, **characterised in that** the system further comprises a trigger device, coupled to the output of the anomaly processor, for triggering delivery to the trainee of a further question when an anomalous response has been detected.

3.  An evaluation system according to either claim 1 or claim 2, **characterised in that** the anomaly processor includes a comparator for comparing the data relating to the scores, confidence levels and times for the set of questions with the data relating to the scores, confidence levels and times for a reduced set of questions in which the data relating to the score, confidence level and time for one question of the set has been eliminated, and the anomaly processor is configured to use the output of the comparator to determine whether or not an anomalous response to the eliminated question is detected.

4.  An evaluation system according to any of the preceding claims, **characterised in that** the anomaly processor is configured to process pairs of data selected from the data relating to the scores, confidence levels and elapsed times and to determine whether or not an anomalous response to a particular question is detected as a function of the processed pairs of data.

5.  An evaluation system according to claim 4, **characterised in that** the anomaly processor comprises:

a score time correlator for correlating the data relating to the scores and times for the set of questions;

a score confidence correlator for correlating the data relating to the scores and confidence levels for the set of questions;

a confidence time correlator for correlating the data relating to the confidence levels and times for the set of questions; and

a combiner, coupled to the score time correlator, score confidence correlator and confidence time correlator, for combining the score time, score confidence and confidence time correlations to form a score time confidence quantity for use by the anomaly processor to determine whether or not an anomalous response to a particular question is detected.

6.  An evaluation system according to any of the preceding claims, **characterised in that** the anomaly processor includes a deviation processor for estimating the mean elapsed time for the set of questions and estimating the amount by which the elapsed time for each question of the set deviates from the mean time, the anomaly processor is configured to use the deviation from the mean times to determine whether or not an anomalous response to a particular question is detected.

7.  An evaluation system according to any of the preceding claims, **characterised in that** the system further comprises a signal generator for generating a signal requesting the input of a confidence level.

8.  An evaluation system according to any of the preceding claims, **characterised in that** the system further comprises a confidence level processor, coupled to the confidence level receiver, for processing the confidence level signal to quantify the confidence level.

9.  An evaluation system according to any of the preceding claims, **characterised in that** the system further comprises a response processor, coupled to the second input and to the store, wherein the second input receives a response signal and the response processor is configured to process the response signal and assign a score to the response.

10. An evaluation system according to any of the preceding claims, **characterised in that** the anomaly processor is configured to process the data relating to the scores, confidence levels and elapsed times for a given trainee.

11. A computer program comprising program instructions which, when loaded into a computer, constitute the evaluation system of any of claims 1 to 10.

12. A computer program according to claim 11, **characterised in that** the computer program is stored in a computer memory.

**13.** An assessment system comprising a question controller, an interface and an evaluation system according to any of claims 2 to 10, **characterised in that** the question controller controls delivery of a plurality of questions forming an assessment to a trainee undergoing assessment and receives responses to the questions from the trainee, the first and second inputs, the store and the trigger device of the training evaluation system being coupled to the question controller via the interface, wherein the number of the questions delivered by the training system is adapted by the training evaluation system to produce a substantially anomaly free response data set.

**14.** A computer program comprising program instructions which, when loaded into a computer, constitute the assessment system of claim 13.

**15.** A method of evaluating a trainee's responses to a plurality of questions comprising the steps of:

determining the elapsed time between a question being delivered to a trainee and the trainee submitting a response;
receiving data relating to the trainee's responses to the plurality of questions;
receiving data relating to the trainee's confidence levels in the responses;
processing the data relating to the trainee's responses, data relating to the trainee's confidence levels and elapsed times to determine whether or not an anomalous response to a particular question is detected; and
producing an output indicating whether or not an anomalous response has been detected.

**16.** A method according to claim 15, **characterised in that** the production of an output indicating an anomalous response has been detected triggers delivery of a further question to the trainee.

**17.** A method according to either claim 15 or claim 16, **characterised in that** the step of processing the data further includes the steps of:

generating a set of data including the data relating to the trainee's responses, data relating to the trainee's confidence and elapsed times for a set of questions;
generating a plurality of reduced sets of data by eliminating the data relating to the trainee's response, data relating to the trainee's confidence and elapsed time for one question from the set;
comparing the set of data with the reduced sets of data to determine whether or not an anomalous response has been detected.

**18.** A method according to any of claims 15 to 17, **characterised in that** the step of processing the data includes the steps of:

selecting pairs of data from the data relating to the responses, confidence levels and elapsed times; and
processing the pairs of data to determine whether or not an anomalous response to a particular question is detected.

**19.** A method according to claim 18, **characterised in that** the step of processing the pairs of data includes calculating the correlation coefficients for each data pair, combining the correlation coefficients for the different data pairs and using the combined correlation coefficients to determine whether or not an anomalous response to a particular question is detected.

**20.** A computer program comprising program instructions which, when run on a computer, carries out the method of any of claims 15 to 19.

Fig. 1

30

16

| | |
|---|---|
| processor | ~32 |
| question delivery interface | ~34 |
| timer | ~36 |
| evaluation database | ~38 |
| confidence level data receiver | ~40 |
| signal generator | ~42 |
| confidence level processor | ~44 |

~18

~22

~24

~20

~26

Fig. 2

Fig. 3

EP 1 256 920 A2

Fig. 4

|  | A | B | C | D | E | F | G | H | I | J | K | L | M | N | O | P |
|---|---|---|---|---|---|---|---|---|---|---|---|---|---|---|---|---|
| 1 |  | 1 | 2 | 3 | 4 | 5 | 6 | 7 | 8 | 9 | 10 | Stndrd Dev |  |  | score/confidence correlation coefficient | 0.22 |
| 2 | score | 20 | 50 | 100 | 40 | 90 | 66 | 100 | 100 | 66 | 100 | 29.31 | 1 |  | confidence/time corelation coefficient | -0.43 |
| 3 | confidence | 60 | 70 | 90 | 50 | 90 | 90 | 20 | 90 | 100 | 90 | 25.06 | 1 |  | score/time corelation coefficient | -0.44 |
| 4 | time | 80 | 30 | 50 | 40 | 50 | 50 | 70 | 80 | 50 | 50 | 16.50 | 1 | 55 | Number of questions in array | 10 |
| 5 | time array | 55.56 | 55.56 | 11.11 | 33.33 | 11.11 | 11.11 | 33.33 | 55.56 | 11.11 | 11.11 |  | 288.8889 |  | Question Control Quotient | 200 |
| 6 | time array2 | 19.23 | 19.23 | 3.85 | 11.54 | 3.85 | 3.85 | 11.54 | 19.23 | 3.85 | 3.85 |  |  |  |  |  |
| 7 |  |  |  |  |  |  |  |  |  |  |  |  |  |  |  |  |
| 8 |  |  |  |  |  |  |  |  |  |  |  |  |  |  |  |  |
| 9 |  |  |  |  |  |  |  |  |  |  |  |  |  |  |  |  |
| 10 |  |  |  |  |  |  |  |  |  |  |  |  |  |  |  |  |
| 11 | score confidence disparity | 40 | 20 | 10 | 10 | 0 | 24 | 80 | 10 | 34 | 10 | 238.0 | 0.762 | 23.25606 | 0.977145484 |  |
| 12 |  |  |  |  |  |  |  |  |  |  |  |  |  |  |  |  |
| 13 |  |  |  |  |  |  |  |  |  |  |  |  |  |  |  |  |

Fig. 5a

EP 1 256 920 A2

| | A | B | C | D | E | F | G | H | I | J | K | L | M | N | O | P |
|---|---|---|---|---|---|---|---|---|---|---|---|---|---|---|---|---|
| | | | | | | | | | | | | | | | | |
| | | | | | | | | | | | | | | | | |
| | Reduced set SC correlation coefficients | 0.11 | 0.21 | 0.16 | 0.09 | 0.18 | 0.24 | 0.77 | 0.16 | 0.27 | 0.16 | 0.20 | 0.24 | 0.83 | | |
| | | | | | | | | | | | | | | | | |
| | Reduced SC sets | | 50 | 100 | 40 | 90 | 66 | 100 | 100 | 66 | 100 | | | | | |
| | | | 70 | 90 | 50 | 90 | 90 | 20 | 90 | 100 | 90 | | 0.11 | | | |
| | | | | | | | | | | | | | | | | |
| | | 20 | | 100 | 40 | 90 | 66 | 100 | 100 | 66 | 100 | | | | | |
| | | 60 | | 90 | 50 | 90 | 90 | 20 | 90 | 100 | 90 | | 0.21 | | | |
| | | | | | | | | | | | | | | | | |
| | | 20 | 50 | | 40 | 90 | 66 | 100 | 100 | 66 | 100 | | | | | |
| | | 60 | 70 | | 50 | 90 | 90 | 20 | 90 | 100 | 90 | | 0.16 | | | |
| | | | | | | | | | | | | | | | | |
| | | 20 | 50 | 100 | | 90 | 66 | 100 | 100 | 66 | 100 | | | | | |
| | | 60 | 70 | 90 | | 90 | 90 | 20 | 90 | 100 | 90 | | 0.09 | | | |
| | | | | | | | | | | | | | | | | |
| | | 20 | 50 | 100 | 40 | | 66 | 100 | 100 | 66 | 100 | | | | | |
| | | 60 | 70 | 90 | 50 | | 90 | 20 | 90 | 100 | 90 | | 0.18 | | | |
| | | | | | | | | | | | | | | | | |
| | | 20 | 50 | 100 | 40 | 90 | | 100 | 100 | 66 | 100 | | | | | |
| | | 60 | 70 | 90 | 50 | 90 | | 20 | 90 | 100 | 90 | | 0.24 | | | |
| | | | | | | | | | | | | | | | | |
| | | 20 | 50 | 100 | 40 | 90 | 66 | | 100 | 66 | 100 | | | | | |
| | | 60 | 70 | 90 | 50 | 90 | 90 | | 90 | 100 | 90 | | 0.77 | | | |
| | | | | | | | | | | | | | | | | |
| | | 20 | 50 | 100 | 40 | 90 | 66 | 100 | | 66 | 100 | | | | | |
| | | 60 | 70 | 90 | 50 | 90 | 90 | 20 | | 100 | 90 | | 0.16 | | | |
| | | | | | | | | | | | | | | | | |
| | | 20 | 50 | 100 | 40 | 90 | 66 | 100 | 100 | | 100 | | | | | |
| | | 60 | 70 | 90 | 50 | 90 | 90 | 20 | 90 | | 90 | | 0.27 | | | |
| | | | | | | | | | | | | | | | | |
| | | 20 | 50 | 100 | 40 | 90 | 66 | 100 | 100 | 66 | | | | | | |
| | | 60 | 70 | 90 | 50 | 90 | 90 | 20 | 90 | 100 | | | 0.16 | | | |
| | | | | | | | | | | | | | | | | |
| | | 0.24 | 0.02 | 0.05 | 0.06 | 0.00 | 0.07 | 17.15 | 0.05 | 0.22 | 0.05 | | | | | |
| | | | | | | | | | | | | | | | | |
| | | | | | | | | | | | | | | | | |
| | | | | | | | | | | | | | | | | |
| | | | | | | | | | | | | | | | | |

Fig. 5b

| Row | A | B | C | D | E | F | G | H | I | J | K | L | M | N | O | P |
|---|---|---|---|---|---|---|---|---|---|---|---|---|---|---|---|---|
| 58 | Reduced set ST correlation coefficients | -0.21 | -0.36 | -0.37 | -0.44 | -0.40 | -0.49 | -0.49 | -0.69 | -0.49 | -0.37 | 0.12 | -0.43 | -0.29 | | |
| 60 | Reduced ST sets | | 50.0 | 100.0 | 40.0 | 90.0 | 66.0 | 100.0 | 100.0 | 66.0 | 100.0 | | -0.43 | | | |
| 61 | | | 19.2 | 3.8 | 11.5 | 3.8 | 3.8 | 11.5 | 19.2 | 3.8 | 3.8 | | | | | |
| 63 | | 20.0 | | 100.0 | 40.0 | 90.0 | 66.0 | 100.0 | 100.0 | 66.0 | 100.0 | | -0.21 | | | |
| 64 | | 19.2 | | 3.8 | 11.5 | 3.8 | 3.8 | 11.5 | 19.2 | 3.8 | 3.8 | | | | | |
| 66 | | 20.0 | 50.0 | | 40.0 | 90.0 | 66.0 | 100.0 | 100.0 | 66.0 | 100.0 | | -0.36 | | | |
| 67 | | 19.2 | 19.2 | | 11.5 | 3.8 | 3.8 | 11.5 | 19.2 | 3.8 | 3.8 | | | | | |
| 69 | | 20.0 | 50.0 | 100.0 | | 90.0 | 66.0 | 100.0 | 100.0 | 66.0 | 100.0 | | -0.37 | | | |
| 70 | | 19.2 | 19.2 | 3.8 | | 3.8 | 3.8 | 11.5 | 19.2 | 3.8 | 3.8 | | | | | |
| 72 | | 20.0 | 50.0 | 100.0 | 40.0 | | 66.0 | 100.0 | 100.0 | 66.0 | 100.0 | | -0.44 | | | |
| 73 | | 19.2 | 19.2 | 3.8 | 11.5 | | 3.8 | 11.5 | 19.2 | 3.8 | 3.8 | | | | | |
| 75 | | 20.0 | 50.0 | 100.0 | 40.0 | 90.0 | | 100.0 | 100.0 | 66.0 | 100.0 | | -0.40 | | | |
| 76 | | 19.2 | 19.2 | 3.8 | 11.5 | 3.8 | | 11.5 | 19.2 | 3.8 | 3.8 | | | | | |
| 78 | | 20.0 | 50.0 | 100.0 | 40.0 | 90.0 | 66.0 | | 100.0 | 66.0 | 100.0 | | -0.49 | | | |
| 79 | | 19.2 | 19.2 | 3.8 | 11.5 | 3.8 | 3.8 | | 19.2 | 3.8 | 3.8 | | | | | |
| 81 | | 20.0 | 50.0 | 100.0 | 40.0 | 90.0 | 66.0 | 100.0 | | 66.0 | 100.0 | | -0.49 | | | |
| 82 | | 19.2 | 19.2 | 3.8 | 11.5 | 3.8 | 3.8 | 11.5 | | 3.8 | 3.8 | | | | | |
| 84 | | 20.0 | 50.0 | 100.0 | 40.0 | 90.0 | 66.0 | 100.0 | 100.0 | | 100.0 | | -0.69 | | | |
| 85 | | 19.2 | 19.2 | 3.8 | 11.5 | 3.8 | 3.8 | 11.5 | 19.2 | | 3.8 | | | | | |
| 87 | | 20.0 | 50.0 | 100.0 | 40.0 | 90.0 | 66.0 | 100.0 | 100.0 | 66.0 | | | -0.49 | | | |
| 88 | | 19.2 | 19.2 | 3.8 | 11.5 | 3.8 | 3.8 | 11.5 | 19.2 | 3.8 | | | -0.37 | | | |
| 90 | | 0.95 | 0.27 | 0.11 | 0.02 | 0.00 | 0.30 | 1.01 | 0.89 | 0.43 | 0.11 | | | | | |

Fig. 5c

18

| | A | B | C | D | E | F | G | H | I | J | K | L | M | N | O | P |
|---|---|---|---|---|---|---|---|---|---|---|---|---|---|---|---|---|
| | | 60.00 | 70.00 | 90.00 | 50.00 | 90.00 | 90.00 | 20.00 | 90.00 | 100.00 | 90.00 | | | | | |
| | Reduced set CT correlation coefficients | -0.39 | -0.45 | -0.40 | -0.44 | -0.40 | -0.40 | -0.59 | -0.61 | -0.37 | -0.40 | 0.09 | -0.44 | -0.20 | | |
| | Reduced CT sets | | 70.0 | 90.0 | 50.0 | 90.0 | 90.0 | 20.0 | 90.0 | 100.0 | 90.0 | | | | | |
| | | | 19.2 | 3.8 | 11.5 | 3.8 | 3.8 | 11.5 | 19.2 | 3.8 | 3.8 | | -0.39 | | | |
| | | 60.0 | | 90.0 | 50.0 | 90.0 | 90.0 | 20.0 | 90.0 | 100.0 | 90.0 | | | | | |
| | | 19.2 | | 3.8 | 11.5 | 3.8 | 3.8 | 11.5 | 19.2 | 3.8 | 3.8 | | -0.45 | | | |
| | | 60.0 | 70.0 | | 50.0 | 90.0 | 90.0 | 20.0 | 90.0 | 100.0 | 90.0 | | | | | |
| | | 19.2 | 19.2 | | 11.5 | 3.8 | 3.8 | 11.5 | 19.2 | 3.8 | 3.8 | | -0.40 | | | |
| | | 60.0 | 70.0 | 90.0 | | 90.0 | 90.0 | 20.0 | 90.0 | 100.0 | 90.0 | | | | | |
| | | 19.2 | 19.2 | 3.8 | | 3.8 | 3.8 | 11.5 | 19.2 | 3.8 | 3.8 | | -0.44 | | | |
| | | 60.0 | 70.0 | 90.0 | 50.0 | | 90.0 | 20.0 | 90.0 | 100.0 | 90.0 | | | | | |
| | | 19.2 | 19.2 | 3.8 | 11.5 | | 3.8 | 11.5 | 19.2 | 3.8 | 3.8 | | -0.40 | | | |
| | | 60.0 | 70.0 | 90.0 | 50.0 | 90.0 | | 20.0 | 90.0 | 100.0 | 90.0 | | | | | |
| | | 19.2 | 19.2 | 3.8 | 11.5 | 3.8 | | 11.5 | 19.2 | 3.8 | 3.8 | | -0.40 | | | |
| | | 60.0 | 70.0 | 90.0 | 50.0 | 90.0 | 90.0 | | 90.0 | 100.0 | 90.0 | | | | | |
| | | 19.2 | 19.2 | 3.8 | 11.5 | 3.8 | 3.8 | | 19.2 | 3.8 | 3.8 | | -0.59 | | | |
| | | 60.0 | 70.0 | 90.0 | 50.0 | 90.0 | 90.0 | 20.0 | | 100.0 | 90.0 | | | | | |
| | | 19.2 | 19.2 | 3.8 | 11.5 | 3.8 | 3.8 | 11.5 | | 3.8 | 3.8 | | -0.61 | | | |
| | | 60.0 | 70.0 | 90.0 | 50.0 | 90.0 | 90.0 | 20.0 | 90.0 | | 90.0 | | | | | |
| | | 19.2 | 19.2 | 3.8 | 11.5 | 3.8 | 3.8 | 11.5 | 19.2 | | 3.8 | | -0.37 | | | |
| | | 60.0 | 70.0 | 90.0 | 50.0 | 90.0 | 90.0 | 20.0 | 90.0 | 100.0 | | | | | | |
| | | 19.2 | 19.2 | 3.8 | 11.5 | 3.8 | 3.8 | 11.5 | 19.2 | 3.8 | | | -0.40 | | | |
| | | 0.35 | 0.09 | 0.07 | 0.00 | 0.00 | 0.18 | 3.72 | 0.54 | 0.42 | 0.07 | | | | | |
| | result | 1.54 | 0.38 | 0.23 | 0.08 | 0.00 | 0.55 | 21.87 | 1.48 | 1.06 | 0.23 | 27.43 | | | | |
| | | 5.61 | 1.39 | 0.85 | 0.29 | 0.00 | 2.00 | 79.75 | 5.39 | 3.88 | 0.85 | | | | | |
| | | clear | clear | clear | clear | clear | clear | hopper | clear | clear | clear | | | | | |

Fig. 5d